# EUROPÄISCHE PATENTSCHRIFT

(11) **EP 0 958 552 B1**
(45) Veröffentlichungstag und Bekanntmachung des Hinweises auf die Patenterteilung: **19.09.2001**
(21) Anmeldenummer: 96924753.5
(22) Anmeldetag: 18.07.1996
(51) Int. Cl.: G07C 3/00

(54) **EINRICHTUNG ZUR PRODUKTDATENHALTUNG**
PRODUCT DATA MANAGEMENT SYSTEM
SYSTEME DE GESTION DE DONNEES SUR DES PRODUITS

(30) Priorität: 31.07.1995 DE 29512330 U
(43) Veröffentlichungstag der Anmeldung: 24.11.1999
(73) Patentinhaber: SIEMENS AKTIENGESELLSCHAFT, 80333 München (DE)
(72) Erfinder: HASSEL, Jörg, D-91058 Erlangen (DE)
(86) Internationale Anmeldenummer: DE9601319
(87) Internationale Veröffentlichungsnummer: WO9705577

(56) Entgegenhaltungen:
- EP-A- 0 478 461
- EP-A- 0 495 104
- WO-A-93/13966
- DE-A- 3 313 481
- DE-A- 4 201 293
- DE-A- 4 312 180
- FR-A- 2 703 171
- GB-A- 2 176 637
- US-A- 4 942 534

## Beschreibung

Die Erfindung bezieht sich auf eine Einrichtung zur Produktdatenhaltung während eines jeweiligen Produktlebenslaufs, wobei jeweils ein elektronisch permanent schreib- und lesbarer, jedoch nicht ohne weiteres löschbarer Datenträger nach Art einer Chipkarte dem Produkt sowohl mit Produktbasisdaten als auch mit einer optisch lesbaren dazu korrespondierenden Klarschriftkennung zugeordnet ist und wobei mit Produktlebenslaufereignissen, wie Fertigung, Endprüfung, Nacharbeit, Versand, Nutzerbetrieb, Service und Wartung, Demontage und Recycling durch elektronische Schreib-Lesegeräte die Produktbasisdaten um durch diese Ereignisse bedingte zusätzliche Daten ergänzbar sind.

Ferner bezieht sich die Erfindung auf ein Verfahren zur Produktdatenhaltung während eines jeweiligen Produktlebenslaufs, wobei jeweils ein elektronisch permanent schreib- und lesbarer, jedoch nicht ohne weiteres löschbarer Datenträger nach Art einer Chipkarte dem Produkt sowohl mit Produktbasisdaten als auch mit einer optisch lesbaren dazu korrespondierenden Klarschriftkennung zugeordnet wird und wobei mit Produktlebenslaufereignissen, wie Fertigung, Endprüfung, Nacharbeit, Versand, Nutzerbetrieb, Service und Wartung, Demontage und Recycling durch elektronische Schreib-Lesegeräte die Produktbasisdaten um durch diese Ereignisse bedingte zusätzliche Daten ergänzt werden.

Wenn ein Produkt eine lebensbegleitende Dokumentation erfordert, müssen beispielsweise im Vorfertigungs-, Fertigungs-, Montage-, Materialbereitstellungs- und Qualitätssystem sowie auch bei der Produktnutzung und beim Service bis einschließlich zum Recycling-Prozeß jeweils relevante Daten gespeichert werden. Üblich ist es bislang, die Produktlebenslaufdaten auf Begleitpapieren und Prüfprotokollen an den Entstehungsorten zu erfassen und dezentral oder zentral zu archivieren. Eine Archivierungsmethode hierzu ist beispielsweise die Mikroverfilmung. Der Zugriff auf alle diese Daten ist jedoch, wenn überhaupt, nur mit erheblichen Aufwand möglich.

In diesem Zusammenhang ist aus der FR-A-2 703 171 ein Verfahren und eine Einrichtung der eingangs genannten Art bekannt. Das Dokument beschreibt insbesondere ein System zur Überwachung der Instandhaltung von Kraftfahrzeugen und sieht für jedes Fahrzeug einen elektronisch beschreib- und auslesbaren Datenträger nach Art einer IC-Karte vor. Diese Karte erlaubt alle am Fahrzeug vorgenommenen Operationen zu speichern, auszulesen und zu analysieren und stellt somit für das jeweilige Fahrzeug sowohl eine Identitätskarte als auch ein den "Lebenslauf" enthaltendes Speichermittel dar.

Zur Erhöhung der Sicherheit und zur Begrenzung des Zugangs zum Speicherinhalt der Karte können die Informationen verschlüsselt werden.

Durch die EP-A-0 495 104 ist ferner ein System bekannt, mit dem Informationen betreffend Überprüfung, Instandhaltung und Gesamtarbeitsleistung von Baumaschinen in einfacher Weise ausgewertet werden können. Ein Managementsystem sieht für jede Baumaschine eine Speicherkarte nach Art einer ID-Karte vor, in deren nichtflüchtigen Speicher aus einer Vielzahl von Informationsquellen kontaktlos Daten eingegeben und ausgelesen werden können. Dabei werden die in der Karte gespeicherten Informationen im Bedarfsfall mittels eines Kartenlesers ausgelesen und entweder ausgedruckt oder in einen PC eingelesen, von dem aus sie in einem Massenspeicher archivierbar sind.

Aufgabe der Erfindung ist es, eine Einrichtung und ein Verfahren zur Produktdatenhaltung der eingangs genannten Art so auszubilden, daß ein Weitertragen von Betriebsinterna vermieden wird. Dabei sollen die Produktions- und Produktdaten qualitätssystemkonform auf dem jeweiligen elektronischen Produktpaß in der Fertigung, der Montage, dem Service und beim Recycling fortlaufend verfügbar gehalten sein. Kompatibilität zu Qualitätssystemen wie ISO9000 soll gewährleistet sein.

Gemäß der Erfindung wird diese Aufgabe für eine Einrichtung der eingangs genannten Art dadurch gelöst, daß jeweils unmittelbar vor Versand des Produkts die Daten eines ersten Datenträgers in einem Massenspeicher beim Produkthersteller archivierbar sind, daß dort für den weiteren Lebenslauf des Produkts der erste Datenträger durch einen zweiten gleichartigen Datenträger ersetzbar ist, in den keine sensiblen Fertigungsdaten aus der Menge der bisherigen zusätzlichen Daten, sondern nur die für den weiteren Lebenslauf des Produkts für den Produktanwender relevanten Produktbasisdaten und die für den Produktanwender relevanten, bisher bereits vorliegenden zusätzlichen Daten einschreibbar sind und daß in den zweiten Datenträger dann die im weiteren entstehenden zusätzlichen Daten einschreibbar sind.

Gemäß der Erfindung wird die obige Aufgabe für ein Verfahren der eingangs genannten Art dadurch gelöst, daß jeweils unmittelbar vor Versand des Produkts die Daten eines ersten Datenträgers in einem Massenspeicher beim Produkthersteller archiviert werden, daß dort für den weiteren Lebenslauf des Produkts der erste Datenträger durch einen zweiten gleichartigen Datenträger ersetzt wird, in den keine sensiblen Fertigungsdaten aus der Menge der bisherigen zusätzlichen Daten, sondern nur die für den weiteren Lebenslauf des Produkts für den Produktanwender relevanten Produktbasisdaten und die für den Produktanwender relevanten, bisher bereits vorliegenden zusätzlichen Daten eingeschrieben werden und daß in den zweiten Datenträger dann die im weiteren entstehenden zusätzlichen Daten eingeschrieben werden.

Durch die Erfindung wird absolut sichergestellt, daß für den Anwender eines Produkts irrelevante Daten erst gar nicht auf der ihm auszuhändigenden Chipkarte abgelegt sind. Damit wird zum einen eine unnötige Belegung von Speicherplatz vermieden, zum anderen werden sensible Fertigungsdaten, die für den Anwender des Produkts ohne Belang sind, vollständig ausgeblendet.

Die Erfindung bringt dem Anwender insbesondere Nutzen durch:
- papierarme bzw. papierlose Dokumentation und Fertigungssteuerung
- Sicherstellung der Nachverfolgbarkeit der Produktqualität im Rahmen von Fertigung, Montage, Service und Recyclingvorgängen
- Dokumentation von Prüfergebnissen, Nach- und Wartungsarbeiten in den verschiedenen Phasen des Produktlebens
- Sicherstellung der Service- und Wartungsfähigkeit des Produktes durch Dokumentation von verbauten Teilen (Teilevarianten, Ausstattungen etc.) oder eingesetzten Chargenbezeichnungen
- Dokumentation von Prüfergebnissen, Fehlteilen zur Nacharbeitssteuerung
- Nachweisführung im Rahmen von Produkthaftungsfällen
- Erleichterung von Wartungsarbeiten durch produktindividuelle Dokumentation der verwendeten Teilevarianten
- Erleichterung des Recyclingprozesses durch Dokumentation der vorliegenden Einsatzteile bzw. -Stoffe.

Vorteilhafte Ausbildungen der Erfindung sind dadurch gekennzeichnet, daß über eine Verschlüsselung die den Lebenslaufabschnitten zugeordneten Schreib-Lesegeräte jeweils nur Zugriff auf die Produktbasisdaten und spezifisch vorgebbare Untermengen der zusätzlichen Daten haben. Damit ist eine zusätzliche Sicherheit vor unbefugten Zugriffen auf den Datenbestand gewährleistet.

Ein Ausführungsbeispiel der Erfindung ist in der Zeichnung dargestellt und wird im folgenden näher erläutert. Dabei zeigen:
- FIG 1: die Vorderansicht einer Chipkarte,
- FIG 2: deren Rückansicht und
- FIG 3: ein Strukturbild.

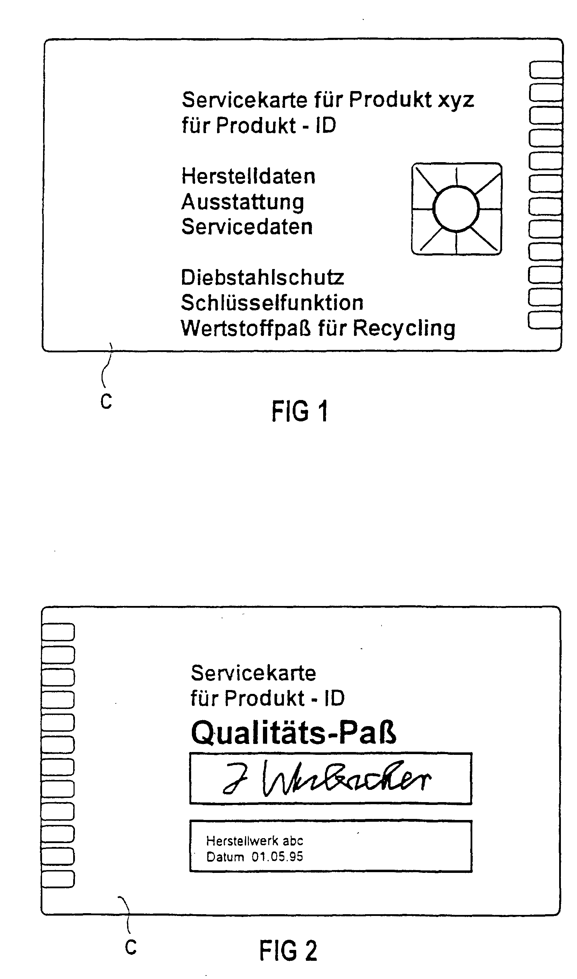

In der Darstellung gemäß FIG 1 ist die Vorderansicht eines Datenträgers, in diesem Fall einer Chipkarte C, mit hohem Speichervolumen gezeigt. Dabei kann es sich um Volumen in der Größe zwischen 8 und 64 MB handeln. Über Kontaktflächen, die in der Darstellung'durch ovale Felder angedeutet sind, kann in Schreib-Lesegeräten, auf die im folgenden noch eingegangen wird, eine derartige Chipkarte C elektronisch permanent beschrieben und gelesen werden. Die Vorgänge des Lesens und Schreibens können selbstverständlich über kryptische Verschlüsselungen erfolgen. Selbstverständlich könnten auch Kontaktflächen wie bei handelsüblichen Telefonkarten vom Prinzip her verwendet werden.

Ferner kann auf der Chipkarte C in Klarschrift eine Information über Produktbasisdaten erfolgen. In der Darstellung gemäß FIG 1 lautet diese Information:
Servicekarte für Produkt xyz
für Produkt - ID
Herstelldaten
Ausstattung
Servicedaten

Diebstahlschutz
Schlüsselfunktion
Wertstoffpaß für Recycling

Für xyz kann dann beispielsweise ein PKW-Typ angegeben sein, für Produkt-ID kann dabei eine Fahrgestellnummer des PKW verwendet werden. Ferner können zusätzliche graphische Elemente, beispielsweise Firmenmarken und ähnliches auf der Chipkarte C aufgedruckt sein.

In der Darstellung gemäß FIG 2 ist die Rückseite der oben beschriebenen Chipkarte C dargestellt. Auch hier kann ein Aufdruck vorgesehen sein. Im Ausführungsbeispiel sei der Aufdruck wie folgt aufgeteilt:
Servicekarte
für Produkt - ID
Qualitäts-Paß
Unterschrift
Herstellwerk abc
Datum 01.05.95

Für abc kann in Klarschrift das Herstellwerk, z.B. das jeweilige Automobilwerk, angegeben sein.

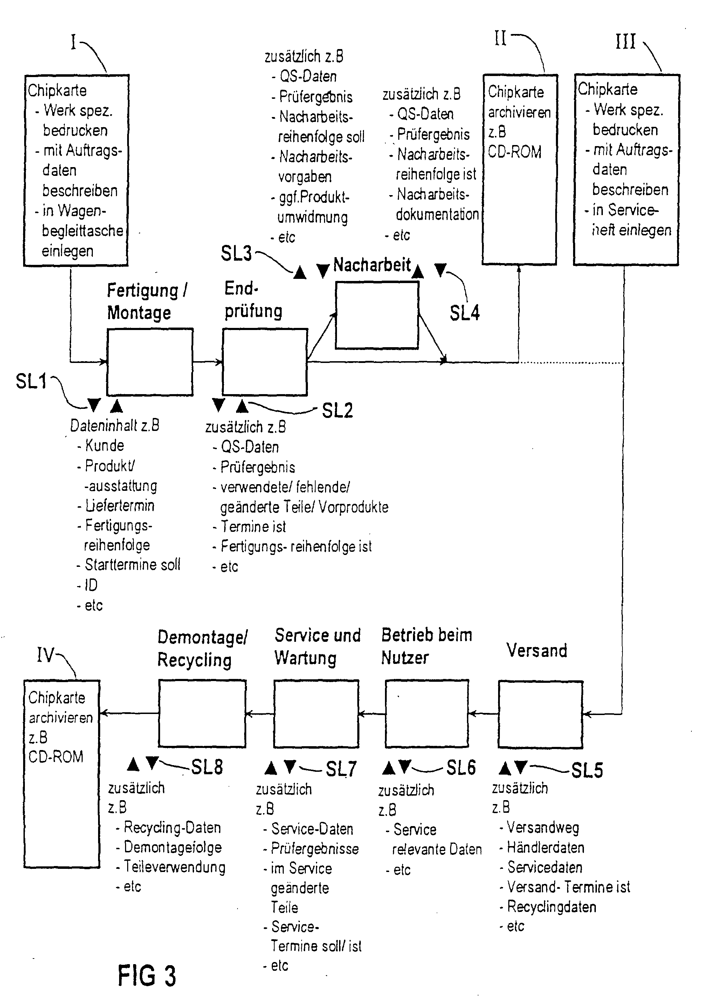

In der Darstellung gemäß FIG 3 ist das Zusammenspiel von Schreib-Lesegeräten SL1 bis SL8 mit Chipkarten dargestellt. Zunächst wird in einem Block I die Chipkarte mit werkspezifischer Bedruckung versehen, ferner werden Produktbasisdaten, insbesondere die Auftragsdaten, über eine der Übersichtlichkeit halber nicht dargestellte Schreib- bzw. Leseeinrichtung der Chipkarte eingeschrieben. Dann wird die Chipkarte in eine Wagenbegleittasche eingelegt und gelangt mit dem Produkt zunächst in Fertigung/Montage. Dort wird über ein Schreib-Lesegerät SL1 der bisherige Dateninhalt um die fertigungs-bzw. montagespezifischen Daten ergänzt. Bei diesen Daten kann es sich handeln um: Informationen über Kunden, Produkt, Ausstattung, Liefertermin, Fertigungsreihenfolge, Starttermin soll, ID, Kennung. Aus der Fertigung/Montage gelangt das Produkt in die Endprüfung, wo mit Hilfe eines Schreib-Lesegerätes SL2 die in der Endprüfung anfallenden zusätzlichen Daten der Chipkarte zusätzlich elektronisch eingeschrieben werden. Dabei kann es sich handeln um: QS-Daten, Prüfergebnisse, verwendete oder fehlende oder geänderte Teile bzw. Vorprodukte, Termine ist, Fertigungsreihenfolge.

Im Flußdiagramm, dem sowohl die Einrichtungsanordnung als auch der korrespondierende Verfahrenslauf entnehmbar ist, wird nun gezeigt, daß eventuell das Produkt eine Nacharbeit erforderlich macht. Dazu kann bei einer zweischrittigen Arbeitsweise in einem Schreib-Lesegerät SL3 eine Ergänzung um folgende Daten erfolgen: QS-Daten, Prüfergebnis, Nacharbeitsreihenfolge soll, Nacharbeitsvorgaben, gegebenenfalls Produktumwidmung. In einem Schreib-Lesegerät SL4, das ebenfalls der Stufe Nacharbeit zugeordnet ist, können folgende zusätzlich Daten ergänzt werden: QS-Daten, Prüfergebnis, Nacharbeitsreihenfolge ist, Nacharbeitsdokumentation.

Das Produkt ist nunmehr vollständig erstellt und versandfertig. Über den gestrichelten Pfad ist angedeutet, daß das Produkt nunmehr mit einer zugehörigen Chipkarte in den Versand gelangt und dort in einem Schreib-Lesegerät SL5 zusätzlich die folgenden Informationen erhält: Versandweg, Händlerdaten, Servicedaten, Versandtermin ist, Recyclingdaten. Im weiteren Lebensabschnitt Betrieb beim Nutzer können über ein Schreib-Lesegerät SL6 servicerelevante Daten eingegeben werden.

Im Lebensabschnitt Service und Wartung können über ein Schreib-Lesegerät SL7 folgende Daten der Chipkarte eingeprägt werden: Servicedaten, Prüfergebnisse, im Service geänderte Teile, Servicetermine soll/ist.

Wesentlich für moderne Produktverfolgung ist auch die Betrachtung des Lebensabschnittes Demontage/Recycling. Dort kann über ein Schreib-Lesegerät SL8 der Chipkarte die zusätzliche Information gegeben werden über: Recyclingsdaten, Demontagefolge, Teileverwendung. Wenn das Produkt nunmehr sein Lebensende erreicht hat, können die Daten der Chipkarte in einem Block IV mit Hilfe der Übersichtlichkeit halber nicht angedeuteten weiteren Schreib-Lesegeräte beispielsweise auf CD-ROM dokumentiert werden und es kann dann eine Archivierung dieser Daten veranlaßt werden. Die jeweiligen Schreib-Lesegeräte SL1 bis SL8 können jeweils kryptische Schlüssel bekommen, so daß nur jeweils ein Teilbereich der auf der Chipkarte abgelegten Informationen geschrieben bzw. gelesen werden kann.

Es zeigt sich, daß während der Produkterzeugung viele Daten entstehen, die für das weitere Produktleben irrelevant sind und nur beim Hersteller zu dokumentieren sind. Für diesen Fall ist vorgesehen, daß die ursprüngliche Chipkarte in einem Block II vom eigentlichen Produkt getrennt wird, daß beim Hersteller eine Archivierung der Informationen der ursprünglichen Chipkarte beispielsweise auf CD-ROM erfolgt und daß in einem Block III eine neue, der ersten Chipkarte entsprechende Chipkarte erstellt wird, die allerdings nur die für das weitere Produktleben relevanten zusätzliche Daten beinhaltet. Diese weitere Chipkarte begleitet dann das Produkt bis zu dessen Lebensende.

Die Chipkarte kann im übrigen auch für Identifikationszwecke ähnlich einem Wagenschlüssel oder einem Fahrzeugschein verwendet werden.

## Patentansprüche

1. Einrichtung zur Produktdatenhaltung während eines jeweiligen Produktlebenslaufs, wobei jeweils ein elektronisch permanent schreib- und lesbarer, jedoch nicht ohne weiteres löschbarer Datenträger nach Art einer Chipkarte (C) dem Produkt sowohl mit Produktbasisdaten als auch mit einer optisch lesbaren dazu korrespondierenden Klarschriftkennung zugeordnet ist und wobei mit Produktlebenslaufereignissen, wie Fertigung, Endprüfung, Nacharbeit, Versand, Nutzerbetrieb, Service und Wartung, Demontage und Recycling durch elektronische Schreib-Lesegeräte (SL1 bis SL8) die Produktbasisdaten um durch diese Ereignisse bedingte zusätzliche Daten ergänzbar sind, **dadurch gekennzeichnet, daß** jeweils unmittelbar vor Versand des Produkts die Daten eines ersten Datenträgers in einem Massenspeicher beim Produkthersteller archivierbar sind, daß dort für den weiteren Lebenslauf des Produkts der erste Datenträger durch einen zweiten gleichartigen Datenträger ersetzbar ist, in den keine sensiblen Fertigungsdaten aus der Menge der bisherigen zusätzlichen Daten, sondern nur die für den weiteren Lebenslauf des Produkts für den Produktanwender relevante Produktbasisdaten und die für den Produktanwender relevanten, bisher bereits vorliegenden zusätzlichen Daten einschreibbar sind und daß in den zweiten Datenträger dann die im weiteren entstehenden zusätzlichen Daten einschreibbar sind.

2. Einrichtung nach Anspruch 1, **dadurch gekennzeichnet, daß** über eine Verschlüsselung die den Lebenslaufabschnitten zugeordneten Schreib-Lesegeräte (SL1 bis SL8) jeweils nur Zugriff auf die Produktbasisdaten und spezifisch vorgebbare Untermengen der zusätzlichen Daten haben.

3. Verfahren zur Produktdatenhaltung während eines jeweiligen Produktlebenslaufs, wobei jeweils ein elektronisch permanent schreib- und lesbarer, jedoch nicht ohne weiteres löschbarer Datenträger nach Art einer Chipkarte (C) dem Produkt sowohl mit Produktbasisdaten als auch mit einer optisch lesbaren dazu korrespondierenden Klarschriftkennung zugeordnet wird und wobei mit Produktlebenslaufereignissen, wie Fertigung, Endprüfung, Nacharbeit, Versand, Nutzerbetrieb, Service und Wartung, Demontage und Recycling durch elektronische Schreib-Lesegeräte (SL1 bis SL8) die Produktbasisdaten um durch diese Ereignisse bedingte zusätzliche Daten ergänzt werden, **dadurch gekennzeichnet, daß** jeweils unmittelbar vor Versand des Produkts die Daten eines ersten Datenträgers in einem Massenspeicher beim Produkthersteller archiviert werden, daß dort für den weiteren Lebenslauf des Produkts der erste Datenträger durch einen zweiten gleichartigen Datenträger ersetzt wird, in den keine sensiblen Fertigungsdaten aus der Menge der bisherigen zusätzlichen Daten, sondern nur die für den weiteren Lebenslauf des Produkts für den Produktanwender relevante Produktbasisdaten und die für den Produktanwender relevanten, bisher bereits vorliegenden zusätzlichen Daten eingeschrieben werden und daß in den zweiten Datenträger dann die im weiteren entstehenden zusätzlichen Daten eingeschrieben werden.

4. Verfahren nach Anspruch 3, **dadurch gekennzeichnet, daß** über eine Verschlüsselung die den Lebenslaufabschnitten zugeordneten Schreib-Lesegeräte (SL1 bis SL8) jeweils nur Zugriff auf die Produktbasisdaten und spezifisch vorgebbare Untermengen der zusätzlichen Daten haben.

## Claims

1. Device for product data management during the lifetime of the product, with an electronic data medium in the form of a chip card (C) that is permanently write- and read-enabled but is not easily erased, also having both basic product data and the respective optically readable plain text ID, and where the basic product data can be supplemented with additional data associated with product lifetime events such as manufacturing, final testing, rework, shipping, user operation, service and maintenance, disassembly and recycling, using electronic read-write devices (SL1 to SL8), **characterised in that** directly before shipment of the product, the data of a first data medium can be archived in a bulk memory at the product manufacturer, that there the first data medium can be replaced for the further life of the product by a second data medium of the same type to which no sensitive manufacturing data from the set of existing additional data can be written, but rather only the basic product data relevant to the product user for the further life of the product and the existing additional data which is relevant for the product user, and that the additional data which arises in the future can then be written to the second data medium.

2. Device according to Claim 1, **characterised in that** thanks to encryption the read-write devices (SL1 to SL8) assigned to the life cycle segments each have access only to the basic product data and specifically definable subsets of the additional data.

3. Method for product data management during the lifetime of the product, electronic data medium in the form of a chip card (C) that is permanently write- and read-enabled but is not easily erased, also having both basic product data and the respective optically readable plain text ID, and where the basic product data is supplemented with additional data associated with product lifetime events such as manufacturing, final testing, rework, shipping, user operation, service and maintenance, disassembly and recycling, using electronic read-write devices (SL1 to SL8), **characterised in that** directly before shipment of the product, the data of a first data medium is archived in a bulk memory at the product manufacturer, that there the first data medium is replaced for the further life of the product by a second data medium of the same type to which no sensitive manufacturing data from the set of existing additional data is written, but rather only the basic product data relevant to the product user for the further life of the product and the existing additional data which is relevant for the product user, and that the additional data which arises in the future is then written to the second data medium.

4. Method according to Claim 3, **characterised in that** thanks to encryption the read-write devices (SL1 to SL8) assigned to the life cycle segments each have access only to the basic product data and specifically definable subsets of the additional data.

## Revendications

1. Système de gestion de données sur des produits pendant le cycle de vie de chaque produit, un support de données à lecture-écriture électronique permanente, mais non directement effaçable, du genre carte (C) à puce, étant associé à chaque produit et étant pourvu à la fois de données de base du produit et d'un marquage correspondant en clair pouvant être lu optiquement, et, lors d'évènements au cours du cycle de vie du produit, tels que fabrication, contrôle final, retouches, expédition, exploitation par l'utilisateur, service après vente et entretien, démontage et recyclage, les données de base du produit pouvant, par des appareils (SL1 à SL8) électroniques de lecture-écriture, être complétées de données supplémentaires impliquées par ces évènements, **caractérisé en ce que**, juste avant l'expédition du produit, les données d'un premier support de données peuvent être archivées dans une mémoire de masse chez le fabricant du produit, en ce que, chez ce fabricant, le premier support de données peut être remplacé par un deuxième support de données de même type, prévu pour la suite du cycle de vie du produit et dans lequel on ne peut pas inscrire des données de fabrication sensibles provenant de l'ensemble des données supplémentaires jusqu'alors enregistrées, mais uniquement les données de base du produit concernant l'utilisateur du produit pour la suite du cycle de vie du produit et les données supplémentaires déjà existantes jusqu'alors qui concernent l'utilisateur du produit, et en ce qu'on peut ultérieurement inscrire dans le deuxième support de données les données supplémentaires produites par la suite.

2. Système suivant la revendication 1, **caractérisé en ce que**, au moyen d'un codage, les appareils (SL1 à SL8) de lecture-écriture associés aux différentes étapes du cycle de vie n'ont respectivement accès qu'aux données de base du produit et à des sous-ensembles spécifiquement prescriptibles de données supplémentaires.

3. Procédé de gestion de données sur des produits pendant le cycle de vie de chaque produit, un support de données à lecture-écriture électronique permanente, mais non directement effaçable, du genre carte (C) à puce, étant associé à chaque produit et étant pourvu à la fois de données de base du produit et d'un marquage correspondant en clair pouvant être lu optiquement, et, lors d'évènements au cours du cycle de vie du produit, tels que fabrication, contrôle final, retouches, expédition, exploitation par l'utilisateur, service après vente et entretien, démontage et recyclage, les données de base du produit pouvant, par des appareils (SL1 à SL8) électroniques de lecture-écriture, être complétées de données supplémentaires impliquées par ces évènements, **caractérisé en ce que**, juste avant l'expédition du produit, les données d'un premier support de données sont archivées dans une mémoire de masse chez le fabricant du produit, en ce que, chez ce fabricant, le premier support de données est remplacé par un deuxième support de données de même type, prévu pour la suite du cycle de vie du produit et dans lequel on n'inscrit pas de données de fabrication sensibles provenant de l'ensemble des données supplémentaires jusqu'alors enregistrées, mais uniquement les données de base du produit concernant l'utilisateur du produit pour la suite du cycle de vie du produit et les données supplémentaires déjà existantes jusqu'alors qui concernent l'utilisateur du produit, et en ce qu'on inscrit ultérieurement dans le deuxième support de données les données supplémentaires produites par la suite.

4. Procédé suivant la revendication 3, **caractérisé en ce que**, au moyen d'un codage, les appareils (SL1 à SL8) de lecture-écriture associés aux différentes étapes du cycle de vie n'ont respectivement accès qu'aux données de base du produit et à des sous-ensembles spécifiquement prescriptibles de données supplémentaires.
